# EUROPÄISCHE PATENTSCHRIFT

(11) **EP 2 758 650 B1**
(45) Veröffentlichungstag und Bekanntmachung des Hinweises auf die Patenterteilung: **16.06.2021**
(21) Anmeldenummer: 12745835.4
(22) Anmeldetag: 06.08.2012
(51) Int. Cl.: F02D 41/22, F02D 41/40

(54) **VERFAHREN ZUR BEURTEILUNG EINES EINSPRITZVERHALTENS WENIGSTENS EINES EINSPRITZ-VENTILS EINER BRENNKRAFTMASCHINE UND BETRIEBSVERFAHREN FÜR BRENNKRAFTMASCHINE**
METHOD FOR ASSESSING AN INJECTION BEHAVIOUR OF AT LEAST ONE INJECTION VALVE IN AN INTERNAL COMBUSTION ENGINE AND OPERATING METHOD FOR AN INTERNAL COMBUSTION ENGINE
PROCÉDÉ D'ÉVALUATION DU COMPORTEMENT À L'INJECTION D'AU MOINS UNE SOUPAPE D'INJECTION D'UN MOTEUR À COMBUSTION INTERNE, ET PROCÉDÉ PERMETTANT DE FAIRE FONCTIONNER UN MOTEUR À COMBUSTION INTERNE

(30) Priorität: 20.09.2011 DE 102011083033
(43) Veröffentlichungstag der Anmeldung: 30.07.2014
(73) Patentinhaber: Robert Bosch GmbH, 70442 Stuttgart (DE)
(72) Erfinder: JOOS, Klaus, 74399 Walheim (DE); HESS, Werner, 70499 Stuttgart (DE); SCHLUETER, Ruben, Yokohoma-shi Kanagawa 224-8501 (JP); HEISEN, Christoph, 81667 Muenchen (DE); RESCHKE, Christian, 71229 Leonberg (DE); RAPP, Holger, 71254 Ditzingen (DE); HAMEDOVIC, Haris, 71696 Moeglingen (DE); KOENIG, Joerg, 70197 Stuttgart (DE); WIRTH, Stephanie, 70499 Stuttgart (DE); FRIEDMANN, Harry, 71665 Vaihingen An Der Enz (DE); HIRCHENHEIN, Achim, 54311 Trierweiler (DE); KOCH, Andreas, 74369 Loechgau (DE)
(86) Internationale Anmeldenummer: PCT/EP2012/065341
(87) Internationale Veröffentlichungsnummer: WO 2013/041293

(56) Entgegenhaltungen:
- EP-A1- 2 469 064
- DE-A1-102005 051 701
- DE-A1-102008 002 901
- None

## Beschreibung

Aus dem Stand der Technik ist bekannt, charakteristische Kenngrößen der Einspritzventile in Form von Applikationsparametern in einer Vorsteuerung abzulegen. Eine Kennlinie, die hierbei eine Beziehung einer Einspritzmenge zur Ventilansteuerdauer wiedergibt, verläuft im Bereich langer Ansteuerdauern nahezu linear. Dies betrifft vor allem den sogenannten Vollhubbereich, bei dem das Einspritzventil während des Einspritzvorgangs vollständig öffnet. Im Bereich kleiner Ansteuerdauern zeigt sich hingegen eine deutliche Abweichung von der Linearität. Die Zumessgenauigkeit nimmt in Verbindung mit einem signifikanten Anstieg der Exemplarstreuung deutlich ab, wenn die Ansteuerdauer so weit reduziert wird, dass das Einspritzventil nicht mehr oder nur sehr kurz vollständig öffnet.

Aus der DE10 2005 051 701 A1 ist ein Verfahren bekannt, das ermöglicht, eine Abweichung des Verhaltens eines Einspritzventils von der linearen Beziehung zwischen Ansteuerdauer und Einspritzdauer zu beschreiben. Hierzu werden Testeinspritzungen vorgenommen, deren Dauern zunächst noch im linearen Bereich der erwähnten Kennlinie liegen. Die Menge des im Rahmen einer regulären Einspritzung eingespritzten Kraftstoffs wird dabei um die im Rahmen der Messeinspritzung eingespritzte Kraftstoffmenge verringert, um Einflüsse auf die Motorlaufruhe und andere nachteilige Auswirkungen zu vermeiden. Der Effekt der Einspritzungen wird durch eine Auswertung der Luftzahl Lambda, also motorausgangsseitig und indirekt, bewertet. Bei zunehmender Verringerung der Dauer der Testeinspritzungen wird eine Abweichung vom linearen Verhalten über eine Abweichung von der bei einer Linearität erwarteten Luftzahl erfassbar.

Es besteht jedoch weiterhin der Bedarf nach verbesserten Möglichkeiten zur Beurteilung des Einspritzverhaltens von Einspritzventilen während eines Motorbetriebs, die genauere und zuverlässigere Aussagen liefern.

Die DE 10 2008 002 901 A1 offenbart eine Steuerung zum Steuern eines elektromagnetisch betätigten Ventils, umfassend eine erste Stromversorgungssteuerung zum Anlegen eines ersten Elektromagnetbetätigungsimpulses. Dieser Impuls hat die Aufgabe, ein Ventil von einem ersten Zustand in einen zweiten Zustand zu bewegen, wobei diese Bewegung eine Laufzeit des Ventils definiert. Eine zweite Stromversorgungssteuerung legt einen zweiten Elektromagnetbetätigungsimpuls nach einem dem ersten Impuls folgenden Zeitintervall an. Während dieses Intervalls kehrt das Ventil in seinen ersten Zustand zurück. Eine Zeitsteuerung variiert das Zeitintervall zwischen den ersten und zweiten Elektromagnetbetätigungsimpulsen, die ein Paar Elektromagnetbetätigungsimpulse darstellen. Ein Detektor detektiert eine Charakteristik, wie z.B. eine Vorverstellung der Laufzeit des zweiten Elektromagnetbetätigungsimpulses in wenigstens einem Elektromagnetbetätigungsimpulsepaar relativ zu einem anderen Paar. Die Zeitsteuerung variiert das Intervall, bis eine maximale Vorverstellung der Laufzeit detektiert wird. Das Ventil kann ein Ventil eines Kraftstoffinjektors sein, wobei der erste und der zweite Elektromagnetbetätigungsimpuls einem ersten bzw. zweiten Kraftstoffeinspritzimpuls entsprechen. Dies sorgt für die Kalibrierung der Elektromagnetbetätigungsventile, wie beispielsweise denjenigen eines Kraftstoffeinspritzsystems.

### Offenbarung der Erfindung

Erfindungsgemäß werden vor diesem Hintergrund ein Verfahren zur Beurteilung des Einspritzverhaltens wenigstens eines Einspritzventils einer Brennkraftmaschine sowie ein Betriebsverfahren für eine entsprechende Brennkraftmaschine mit den Merkmalen der unabhängigen Patentansprüche vorgeschlagen.

### Vorteile der Erfindung

Zur Beurteilung des Einspritzverhaltens wird eine Brennkraftmaschine in einen durch Ansteuerparameter definierten Sonderbetriebsmodus überführt und während eines Diagnosezeitraums in dem Sonderbetriebsmodus betrieben. Zumindest während des Diagnosezeitraums werden Betriebsparameter der Brennkraftmaschine ermittelt. Wenigstens eine Zusatzeinspritzung kann dabei zusätzlich zu den im regulären Motorbetrieb verwendeten Einspritzungen (nachfolgend auch als "Regeleinspritzungen" bezeichnet) abgesetzt werden. Das Einspritzverhalten charakterisierende Größen werden zumindest während eines Abschnitts des Diagnosezeitraums, bei Absetzung einer Zusatzeinspritzung besonders während dieser, ventilseitig erfasst und auf Grundlage der Betriebsparameter ausgewertet.

Durch die ventilseitige Erfassung und Auswertung der das Einspritzverhalten charakterisierenden Größen, nachfolgend auch als "Ventildiagnose" bezeichnet, kann ein Verhalten eines entsprechenden Einspritzventils sehr viel zuverlässiger als über die aus dem Stand der Technik bekannte, motorausgangsseitige Auswertung der Luftzahl Lambda erfasst werden. Die spezifische Einstellung der Ansteuerparameter sorgt dabei nicht nur für konstante, reproduzierbare Bedingungen, sondern kann, wie unten beschrieben, auch spezifische Voraussetzungen schaffen, die eine entsprechende Ventildiagnose sehr viel schneller und zuverlässiger ermöglichen.

Die genannten Betriebsbedingungen umfassen unter anderem die Spannung des Bordnetzes, einen Raildruck, einen Einspritz- und/oder Zylindergegendruck, das verwendete Einspritzmuster, die Pausenzeit(en) zwischen Einspritzungen, den Kraftstoff bzw. Kraftstofftyp, die Betriebsart der Brennkraftmaschine, deren Momentenreserve sowie Temperaturen, z.B. von Motor, Frischgas, Abgas, Kraftstoff und Einspritzventil sowie Motorlast und Motordrehzahl. Es handelt sich hierbei also sowohl um Ansteuerparameter, mit denen der Motor gezielt angesteuert werden kann, und die dann, wie unten erläutert, einen Sonderbetriebsmodus definieren, als auch um Einflussfaktoren, die zwar nicht gezielt eingestellt aber zumindest zeitweise während des Diagnosezeitraums ermittelt werden können.

Insbesondere kann dabei wichtig sein, welcher Kraftstofftyp eingesetzt wird; dies umfasst z.B. die jeweiligen Mengenanteile an (Bio-) Diesel, Benzin, Ethanol etc.

Ein "Sonderbetriebsmodus" ist also durch die gezielte Einstellung von bestimmten Ansteuerparametern definiert, insbesondere durch einen definierten Raildruck bzw. Einspritzdruck und/oder ein definiertes Einspritzmuster mit zumindest zwei Teileinspritzungen, insbesondere einer Vor- und einer Haupteinspritzung. Ein derartiger Sonderbetriebsmodus kann die Verwendung applikationstechnisch, also z.B. unter Verbrauchs-, Lärm- oder Effizienzaspekten nicht optimaler, jedoch unter Diagnosegesichtspunkten vorteilhafter Ansteuerparameter umfassen, die eine Diagnose mit erhöhter Zuverlässigkeit ermöglichen. Wie der Name aussagt, handelt es sich gerade nicht um einen Regelbetrieb/Normalbetrieb.

Ein Sonderbetriebsmodus zeichnet sich also beispielsweise dadurch aus, dass dieser auf optimale Messbedingungen abgestimmt ist, um z.B. eine schnelle Vermessung bzw. Diagnose durchzuführen. Im Leerlauf wird ein Fahrzeug beispielsweise mit einem Raildruck von 40 bar betrieben. Da eine aussagekräftige Beurteilung eines Einspritzverhaltens jedoch auch Messungen mit anderen Drücken erforderlich macht, werden im Rahmen der erfindungsgemäßen Verfahren kurzfristig, d. h. für die Dauer der jeweiligen Beurteilung, mittels eines Koordinators bzw. Steuergeräts entsprechende andere Drücke bereitgestellt. Diese sind zwar aus Applikationssicht nicht optimal, liefern jedoch optimale Ergebnisse aus messtechnischer Sicht. Aufgrund dieser Maßnahmen lässt sich letztlich im Regelbetrieb ein vorteilhafter Betrieb erzielen, der auf den während des Sonderbetriebsmodus ermittelten Informationen beruhen kann.

Die erfindungsgemäßen Maßnahmen unterstützen durch eine spezifische Ansteuerung der Brennkraftmaschine mittels der Ansteuerparameter die Vermessung bzw. Diagnose der Einspritzventile während des Betriebs der Brennkraftmaschine und ermöglichen durch das Erfassen und/oder Einstellen definierter Betriebsbedingungen eine schnelle Vermessung mit hoher Güte. Hierbei können durch das gezielte Anfahren von Betriebspunkten unter definierten Ansteuerparametern und Einflussfaktoren Quereinflüsse gezielt berücksichtigt, beeinflusst und/oder ausgeblendet werden.

Durch den Sonderbetriebsmodus wird eine Vermessung der Einspritzventile und eine Beurteilung des Einspritzverhaltens in Verbindung mit entsprechenden Diagnoseverfahren unter definierten Randbedingungen ermöglicht. Der Sonderbetriebsmodus erlaubt in Verbindung mit derartigen definierten Betriebsbedingungen (beispielsweise Druck und Temperatur) eine deutlich gesteigerte Erkennungsgüte, da Einflussgrößen auf die ventilindividuelle Einspritzung gezielt berücksichtigt bzw. ausgeblendet werden können.

Durch das gezielte Einstellen von Ansteuerparametern, also mit anderen Worten die Erzwingung definierter Randbedingungen, ermöglicht der Sonderbetriebsmodus eine gezielte Korrektur der Einflüsse (z.B. von Raildruck, Kraftstofftemperatur, Kraftstoff oder Einspritzmuster) auf die Zumessung des Einspritzventils. Zudem kann ein Geschwindigkeitsvorteil bis zum Vorliegen belastbarer ventilindividueller Ansteuerkorrekturwerte erzielt werden, sofern für bestimmte Diagnoseverfahren gezielte Abläufe oder Randbedingungen für eine bestimmte Zeitdauer benötigt werden. So erfordern bestimmte Diagnoseverfahren, wie z.B. unten näher erläutert, in bestimmter Häufigkeit definierte Ansteuerdauern bzw. Ansteuersequenzen. Im normalen Motorbetrieb dauert es gegebenenfalls sehr lange, bis sich entsprechende Betriebsbedingungen zufällig ergeben oder solche Betriebsbedingungen kommen nie zufällig vor. Beispielsweise können in entsprechenden Diagnoseverfahren Sequenzen festgelegter Ansteuerdauern mit einer definierten Anzahl an Wiederholungsmessungen und definierten Einspritzlagen erforderlich sein, die durch den Sonderbetriebsmodus schnell bereitgestellt werden können. Mit besonderem Vorteil können Ansteuerparameter beispielsweise ein bestimmtes Einspritzmuster umfassen, bei dem zusätzliche Einspritzungen abgesetzt werden. In einer besonders vorteilhaften Umsetzung werden die Einspritzmengen dieser zusätzlichen Einspritzungen von der Gesamtmenge der Regeleinspritzungen (hier als "Regeleinspritzmenge" bezeichnet) abgezogen, so dass die eingespritzte Gesamtmenge sich nicht ändert. In einer weiteren besonders vorteilhaften Umsetzung werden die zusätzlichen Einspritzungen immer nur auf den Zylindern abgesetzt, deren Einspritzventil(e) auch vermessen werden können. Die Zusatzeinspritzungen können als Ansteuerdauern in Verbindung mit einer anschließenden Berechnung der dazugehörigen Kraftstoffmassen vorgegeben werden. Alternativ können Zusatzeinspritzungen auf Basis von Kraftstoffmassenvorgaben vorgegeben werden.

Diagnoseverfahren zur Beurteilung des Einspritzverhaltens von Einspritzventilen sind z.B. aus der DE 10 2009 045 469 A1 und der DE 10 2009 002 483 A1 bekannt und profitieren in besonderer Weise von dem zuvor erläuterten Sonderbetriebsmodus. Ein erläuterter Sonderbetriebsmodus kann auch für andere Diagnoseverfahren vorteilhaft sein. Beispielsweise kann eine Auswertung der Luftzahl Lambda sehr viel zuverlässiger erfolgen, wenn definierte Kraftstoffdrücke in Verbindung mit definierten Kraftstoff- bzw. Ventiltemperaturen eingestellt und/oder zur Auswertung herangezogen werden.

Als Diagnoseverfahren für das oder die Einspritzventile kann vorteilhafterweise ein Verfahren zum Einsatz kommen, bei dem eine erste Ventilverzugszeit bestimmt und aufgrund einer Korrelation dieser mit einer zweiten Ventilverzugszeit die zweite Ventilverzugszeit ermittelt werden kann. Bei Einspritzventilen können als Ventilverzugszeiten eine Öffnungsverzugszeit und eine Schließverzugszeit auftreten. Die Öffnungsverzugszeit ist dabei die Zeit zwischen dem Beginn der Bestromung eines Ventilaktors und dem Zeitpunkt, ab dem sich ein bewegliches Element, z. B. eine Ventilkugel, tatsächlich in Bewegung setzt. Die Schließverzugszeit bezeichnet die Zeit zwischen dem Zeitpunkt, zu dem die Bestromung beendet wird und jenem, zu dem das bewegliche Element seine Ruhelage wieder eingenommen hat.

Bei vielen herkömmlichen Ventiltypen ist die Schließverzugszeit verhältnismäßig einfach aus Betriebsgrößen des Ventils beziehungsweise des darin verbauten Aktors ermittelbar. Beispielsweise kann bei einem elektromagnetischen Aktor eine Auswertung des Aktorstroms beziehungsweise der Aktorspannung zur Ermittlung der Schließverzugszeit dienen (siehe unten). Im Gegensatz hierzu ist es bei gängigen Ventiltypen üblicherweise schwieriger, eine Öffnungsverzugszeit unter Zuhilfenahme derartiger messtechnischer Verfahren zu ermitteln. Da jedoch eine Korrelation zwischen Schließverzugszeit und Öffnungsverzugszeit besteht, können entsprechende Rückschlüsse aus der Schließverzugszeit auf die Öffnungsverzugszeit gezogen werden, so dass sich messtechnische Maßnahmen für die Ermittlung der Öffnungsverzugszeit erübrigen.

Die Anwendung eines entsprechenden Verfahrens ist besonders vorteilhaft in einem ballistischen Betriebsbereich eines Einspritzventils, der dadurch gekennzeichnet ist, dass mindestens eine bewegliche Komponente des Ventils, z.B. eine Ventilnadel, eine ballistische Trajektorie vollführt.

Die erste Verzugszeit ist dabei die Schließverzugszeit, und braucht ihrerseits nicht notwendigerweise durch eine Messung ermittelt werden, sondern kann über eine Ansteuerdauer hergeleitet werden. Ebenfalls ist es möglich, die zweite Verzugszeit in Abhängigkeit von einem minimalen Wert für die erste Verzugszeit - bezogen auf ihren Verlauf über die Ansteuerdauer - zu ermitteln.

Eine zweite Verzugszeit kann in entsprechenden Verfahren auch mittels Modellen ermittelt werden, die ein Betriebsverhalten des Einspritzventils nachbilden, und denen mindestens die erste Verzugszeit und/oder ihr Verlauf über die Ansteuerdauer als Eingangsgröße zugeführt wird. In besonders vorteilhafter Weise werden dem Modell ergänzend auch die Ansteuerdauer und weitere Betriebsparameter wie Kraftstoffdruck, Temperatur und dergleichen, insbesondere im Rahmen des erläuterten Sonderbetriebsmodus, zugeführt.

Zur Diagnose des Ventilverhaltens des oder der Einspritzventile, insbesondere hierbei zur Ermittlung der soeben erläuterten ersten Verzugszeit, kann ferner auch ein Verfahren zum Einsatz kommen, bei dem in Abhängigkeit von einer elektrischen Betriebsgröße des elektromagnetischen Aktors des Ventils eine die Beschleunigung einer beweglichen Komponente des elektromagnetischen Aktors, insbesondere seines Magnetankers, charakterisierende Größe gebildet wird. Ausgehend von der die Beschleunigung charakterisierenden Größe wird auf einen Betriebszustand des Ventils geschlossen.

Dieses Verfahren wird dazu verwendet, einen tatsächlichen hydraulischen Schließzeitpunkt zu ermitteln, zu welchem die Ventilnadel des Einspritzventils auf den Ventilsitz auftrifft.

Als elektrische Betriebsgröße des elektromagnetischen Aktors kann beispielsweise eine an der Magnetspule anliegende Aktorspannung oder ein entsprechender Aktorstrom verwendet werden. Als die die Beschleunigung des Magnetankers charakterisierende Größe wird die erste zeitliche Ableitung der Aktorspannung oder des Aktorstroms gebildet und verwendet.

Sind die genannten Betriebsbedingungen (insbesondere Ansteuerdauern, Kraftstoffdruck, Einspritzmuster inklusive der Pausenzeiten zwischen Einspritzungen und einer möglichen Rampung der Ansteuerung sowie die Kraftstofftemperatur) bekannt oder definiert eingestellt, können entsprechende Verfahren sehr viel schneller und zuverlässiger durchgeführt werden. Umfangreiche rechnerische Extrapolationen bzw. eine Simulation in entsprechend aufwendigen Modellen können zumindest teilweise entfallen.

Die ventilseitige Erfassung der das Einspritzverhalten charakterisierenden Größen und eine entsprechende Auswertung erlauben besonders zuverlässige Rückschlüsse bezüglich des Ventilverhaltens, die weit über eine reine Erfassung einer Linearitätsabweichung, wie aus dem Stand der Technik über die Erfassung eines Lambda-Werts bekannt, hinausgehen.

Im Rahmen derartiger Diagnoseverfahren erweist sich insbesondere als vorteilhaft, wenn definierte Einspritzmuster sowie Kraftstoffdrücke mittels der erläuterten Ansteuerparameter voreingestellt werden, die für das jeweilige Diagnoseverfahren besonders relevant sind. Eine gleichzeitige Überwachung relevanter.

Randbedingungen, d.h. von Betriebsparametern, gewährleistet eine Motorlauffähigkeit in dem jeweiligen Modus unter Berücksichtigung der Anforderungen hinsichtlich Fahrbarkeit, Brennverfahren sowie Emissionen. Unzulässige, also fehlerhafte Vermessungs- bzw. Diagnoseergebnisse durch unzulässige Randbedingungen, werden vorteilhafterweise vermieden.

Das erfindungsgemäße Verfahren kann auch beinhalten, während eines regulären Motorbetriebs die relevanten Betriebsbedingungen, insbesondere die nichtbeeinflussbaren Einflussfaktoren, kontinuierlich zu überwachen und den Sonderbetriebsmodus nur dann anzufordern, wenn die genannten Einflussfaktoren innerhalb eines zulässigen Bereichs für die jeweilige Diagnose liegen. Einflussfaktoren, die negative Auswirkungen auf die Erkennungsgüte eines entsprechenden Diagnoseverfahrens aufweisen können, können gezielt zugelassen oder ausgeblendet werden. Insbesondere kann es sich hierbei um andere Diagnoseverfahren und/oder z.B. um eine sogenannte Schlechtwegeerkennung zur Erkennung eines Straßenzustands handeln.

Wenn die Schlechtwegerkennung beispielsweise einen schlechten Straßenzustand meldet, könnten die dadurch resultierenden Vibrationen zu einem Ventilverhalten führen, welches nicht dem Normalbetrieb entspricht. Dies kann dann gezielt vermieden werden, wenn für diesen Fall eine Diagnose unterbunden wird. Das erfindungsgemäße Verfahren kann insbesondere ein sogenanntes Kollisionsmanagement umfassen, im Rahmen dessen Einspritzungen bei Bedarf derart verschoben werden, dass relevante Parameter, wie z.B. Pausenzeiten zwischen Einspritzungen, in einem zulässigen Bereich für das Erkennungsverfahren liegen. Auch dieses Vorgehen dient dazu, die Messbedingungen für das jeweilige Diagnoseverfahren zu optimieren.

Die hier erläuterten Verfahren können parallel auf allen Zylindern oder zylinderindividuell durchgeführt werden. Eine entsprechende Zusatzeinspritzung kann beliebig appliziert und beispielsweise auch momentenneutral abgesetzt werden. Dies umfasst ein Absetzen der Zusatzeinspritzung(en) während sämtlicher Winkelbereiche des Motorbetriebs, d.h. im Saug-, Kompressions-, Ausstoß- und Arbeitshub.

Ein erfindungsgemäßes Verfahren umfasst mit anderen Worten also beispielsweise zunächst eine Beobachtung bzw. Überwachung von Randbedingungen. Diese können auch eine Feststellung umfassen, ob überhaupt ein Messbedarf für ein Ventil vorliegt. Als weiteres Kriterium wird ermittelt, ob relevante Betriebsparameter gültig sind, also z.B. kein Fehler eines Drucksensors, einer Einspritzventilendstufe oder eines Temperatursensors vorliegen. Ferner wird z.B. festgestellt, ob Motorlast und Motordrehzahl in einem Bereich in dem eine Ventilvermessung sinnvoll ist, ob Quereinflüsse (z.B. ein schlechter Straßenzustand) vorliegen, die sich negativ auf die Messung auswirken und/oder z.B. die Kraftstoff- bzw. Ventiltemperatur in einem Bereich liegt, in dem eine Vermessung vorgenommen werden soll.

Auf Grundlage dieser Randbedingungen, also von Betriebszuständen, wird ermittelt, ob eine Vermessung erfolgen soll. Falls dies der Fall ist, wird der Motor z.B. durch Auswahl des Kraftstoffdrucks, für den die höchste Dringlichkeit hinsichtlich einer Messung besteht, und/oder die Auswahl des passenden Einspritztimings in einen Sonderbetriebsmodus überführt und die Diagnose vorgenommen.

Zu den Merkmalen und Vorteilen des erfindungsgemäß ebenfalls vorgeschlagenen Betriebsverfahrens sei auf die zuvor erläuterten Merkmale und Vorteile ausdrücklich verwiesen.

Auch die Implementierung der Erfindung in Form von Software ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Kurze Beschreibung der Zeichnungen
- Figur 1: zeigt schematisch ein Common-Rail-System, anhand dessen die Erfindung beschrieben wird.
- Figur 2: zeigt Ansteuerschemata für eine Brennkraftmaschine in einem Regel- und einem Sonderbetriebsmodus
- Figur 3: zeigt ein Verfahren gemäß einer besonders bevorzugten Ausführungsform der Erfindung in schematischer Darstellung.

### Ausführungsformen der Erfindung

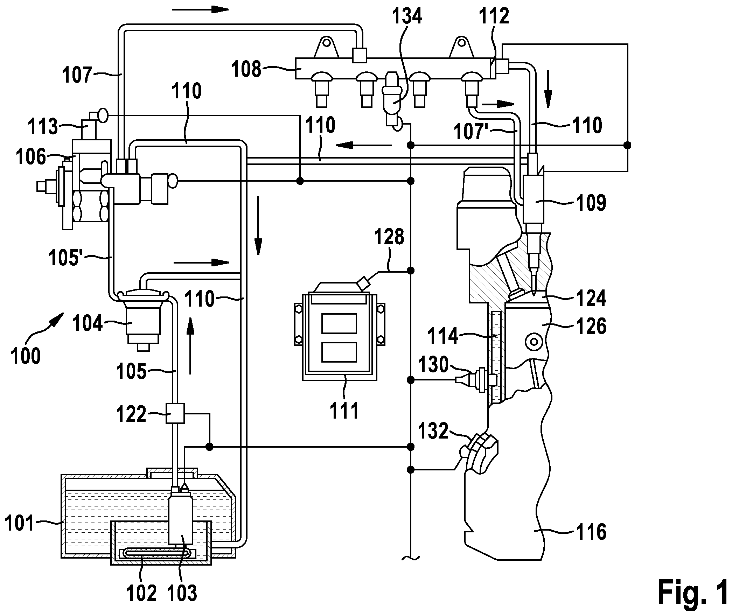

In Figur 1 ist eine hier als Common-Rail-Motor mit Direkteinspritzung ausgebildete Brennkraftmaschine dargestellt, wie sie der vorliegenden Erfindung zugrunde liegen kann. Die erfindungsgemäße Lösung ist jedoch in gleicher Weise beispielsweise in Ottomotoren und/oder Motoren mit Saugrohreinspritzung einsetzbar. Die Brennkraftmaschine umfasst ein Common-Rail-Kraftstoffeinspritzsystem 100 und einen Zylinder 116.

In einem teilweise angeschnitten gezeigten, mit Kühlwasser 114 gekühlten Brennraum 124 des Zylinders 116 ist ein Kolben 126 beweglich angeordnet. Ein Einspritzventil 109 dient zum Einspritzen von Kraftstoff in den Brennraum 124. Wenngleich hier nur ein Zylinder 116 dargestellt ist, ist die Erfindung für Brennkraftmaschinen mit beliebig vielen Zylinder geeignet, wobei das Einspritzverhalten von Ventilen eines oder mehrerer Zylinder beurteilt werden kann.

Das Kraftstoffeinspritzsystem umfasst einen Kraftstofftank 101, der in nahezu gefülltem Zustand gezeigt ist. Innerhalb des Kraftstofftanks 101 ist eine Vorförderpumpe 103 angeordnet, die durch ein Vorfilter 102 Kraftstoff aus dem Tank 101 ansaugt und mit niedrigem Druck von 1 bar bis maximal 10 bar durch eine Kraftstoffleitung 105 bis zu einem Kraftstofffilter 104 befördert. Von dem Kraftstofffilter 104 führt eine weitere Niederdruckleitung 105' zu einer Hochdruckpumpe 106, die den zugeführten Kraftstoff bis auf einen hohen Druck komprimiert, der je nach System typischerweise zwischen 100 bar und 2000 bar liegt. Die entsprechenden Werte bei Ottomotoren betragen typischerweise zwischen 35 bar und 250 bar. Die Hochdruckpumpe 106 weist eine Zumesseinheit (ZME) 113 zum Einstellen einer Kraftstoffmenge auf. Die Hochdruckpumpe 106 speist den komprimierten Kraftstoff in eine Hochdruckleitung 107 und ein mit dieser verbundenes Rail 108 (Hochdruckspeicher), das sogenannte Common-Rail, ein. Vom Rail 108 führt eine weitere Hochdruckleitung 107' zum Einspritzventil 109.

Ein System von Rücklaufleitungen 110 ermöglicht den Rückfluss überschüssigen Kraftstoffs aus dem Kraftstofffilter 104, der Hochdruckpumpe 106 bzw. der Zumesseinheit 113, dem Injektor 109 und dem Rail 108 in den Kraftstofftank 101. Dabei ist zwischen das Rail 108 und die Rückflussleitung 110 ein Druckregelventil (DRV) 112 geschaltet, das - neben der ZME - durch Verändern der vom Rail 108 in die Rückflussleitung 110 abfließenden Kraftstoffmenge den im Rail 108 herrschenden hohen Druck, den sog. Raildruck, regeln kann.

Das gesamte Common-Rail-Einspritzsystem 100 wird durch ein Steuergerät 111 gesteuert, das über elektrische Leitungen 128 u.a. mit der Vorförderpumpe 103, der Hochdruckpumpe 106, der Zumesseinheit 113, dem Einspritzventil 109, einem Drucksensor 134 am Rail 108, dem Druckregelventil 112 sowie Temperatursensoren 130, 132, 122 am Zylinder 116 bzw. an der Kraftstoffzulaufleitung 105 verbunden ist. Weitere, jedoch nicht dargestellte Sensoren oder Softsensoreinrichtungen sind beispielsweise zur Erfassung der Spannung des Bordnetzes, und weiterer Temperaturen (z.B. der Motortemperatur, der Kraftstofftemperatur, der Kraftstoffzusammensetzung, der Temperatur zugeführten Frischgases oder des Abgases) sowie des Kraftstoffdrucks vorgesehen. Das Steuergerät 111 ist zur Durchführung eines erfindungsgemäßen Verfahrens, insbesondere zur Einstellung des Regel- und/oder des Sonderbetriebsmodus, wie oben erläutert, eingerichtet.

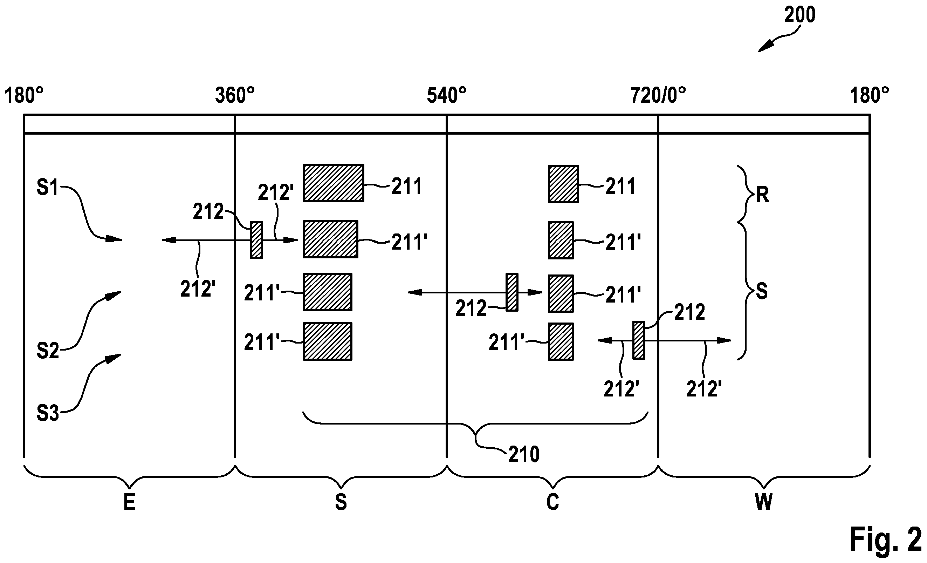

Figur 2 zeigt Ansteuerschemata für eine Brennkraftmaschine in einem Regelbetriebsmodus R und einem Sonderbetriebsmodus S gemäß besonders bevorzugter Ausführungsformen der Erfindung. Die Ansteuerschemata sind insgesamt mit 200 bezeichnet und über einen Kurbelwellenwinkel in Grad aufgetragen. Die Darstellung ist auf einen Zylinder beschränkt, die beschriebenen Konzepte können jedoch in einer beliebigen Anzahl von Zylindern realisiert sein.

Mit E ist in einem Kurbelwellenwinkelbereich von 180° bis 360° ein Ausstoßhub dargestellt. S bezeichnet einen Saughub in einem Kurbelwellenwinkelbereich von 360° bis 540°. Mit C ist in einem Kurbelwellenwinkelbereich von 540° bis 720° bzw. 0° ein Kompressionshub, mit W in einem Kurbelwellenwinkelbereich von 0° bis 180° ein Arbeitshub bezeichnet. Mit R ist ein Regelbetriebsmodus, mit S (bzw. einzeln mit S1 bis S3) sind Sonderbetriebsmodi angegeben.

Der Regelbetriebsmodus R und die Sonderbetriebsmodi S1 bis S3 unterscheiden sich unter anderem in Form der jeweils vorgesehenen Einspritzmuster 210. Die in der Figur 2 dargestellte Einspritzung erfolgt sowohl im Regelbetriebsmodus R als auch in den Sonderbetriebsmodi S1 bis S3 in Form einer sogenannten Spliteinspritzung mit jeweils zwei Teileinspritzungen 211 bzw. 211', von denen jeweils eine während des Saughubs S und eine während des Kompressionshubs C abgesetzt wird. Der Fachmann wird verstehen, dass die erfindungsgemäßen Maßnahmen bei anderen Einspritzschemata verwendet werden können. So muss die Basis der Diagnose keine Spliteinspritzung darstellen, vielmehr kann auch eine Aufteilung einer Regeleinspritzung in eine Haupt- und eine Messeinspritzung erfolgen. Auch kann es in bestimmten Fällen vorteilhaft sein, sämtliche Einspritzungen im Saughub oder Kompressionshub oder in Form einer entsprechenden Kombination oder in anderen Winkelbereichen abzusetzen. Dabei können auch mehr als zwei oder drei Einspritzungen abgesetzt werden.

Gemäß einer besonders bevorzugten Ausführungsform der Erfindung ist vorgesehen, während eines Sonderbetriebsmodus S1 bis S3, zusätzlich zu den jeweiligen Teileinspritzungen 211' Zusatzeinspritzungen 212 vorzunehmen. Die im Rahmen der Zusatzeinspritzungen 212 eingespritzte Kraftstoffmenge reduziert dabei vorteilhafterweise die der jeweiligen Teileinspritzungen 211 des Regelbetriebsmodus R, so dass sich für die Teileinspritzungen 211' des Sonderbetriebsmodus S1 bis S3 jeweils eine reduzierte Kraftstoffmenge ergibt. Die Teileinspritzungen 212 können, wie durch die Pfeile 212' veranschaulicht, jeweils ausgedehnt oder zeitlich verlagert werden. Dabei muss nicht notwendigerweise die erste oder nur die erste Regeleinspritzung um die Messeinspritzung korrigiert werden, es können auch beliebige andere Einspritzungen reduziert werden.

Während der jeweiligen Teileinspritzungen 212 erfolgt gemäß einer besonders bevorzugten Ausführungsform der Erfindung eine Diagnose des jeweiligen Einspritzverhaltens, wie oben erläutert.

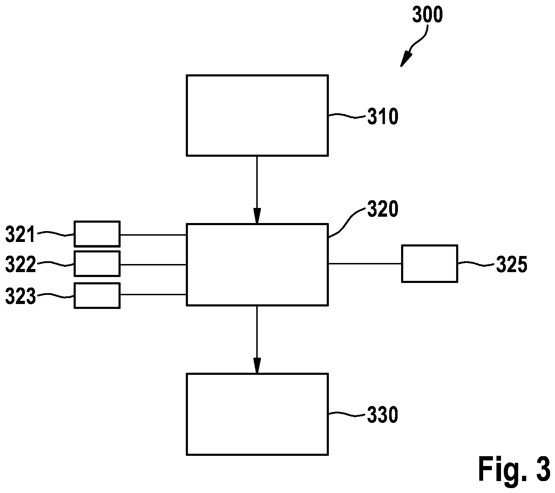

In Figur 3 ist, insgesamt mit 300 bezeichnet, ein Verfahren gemäß einer besonders bevorzugten Ausführungsform der Erfindung dargestellt. In einem ersten Verfahrensschritt 310 läuft die Brennkraftmaschine in einem Regelbetriebsmodus R. Die Brennkraftmaschine wird durch Verwendung geeigneter Ansteuerparameter in einem Schritt 320 in einen Sonderbetriebsmodus S, wie zuvor erläutert, überführt. In dem Sonderbetriebsmodus S werden, wie erwähnt, Betriebsparameter 321 bis 323 erfasst. Eine Brennkraftmaschine wird z.B. derart angesteuert, 325, dass die zuvor erläuterten Zusatzeinspritzungen abgesetzt werden. Hierbei kann eine Berücksichtigung des Kraftstoffdrucks (z.B. in Form einer Veroderung) erfolgen, wodurch auch andere Diagnoseverfahren von den vorgeschlagenen Maßnahmen profitieren können, weil das Einspritzverhalten druckabhängig ist.

In einem Schritt 330 erfolgt eine Diagnose der jeweils beteiligten Einspritzventile 109, wobei jeweils während der wenigstens einen Zusatzeinspritzung 212 eine das Einspritzverhalten des wenigstens einen Einspritzventils 109 charakterisierende Größe ventilseitig erfasst wird.

## Patentansprüche

1. Verfahren zur Beurteilung eines Einspritzverhaltens wenigstens eines Einspritzventils (109) einer Brennkraftmaschine, das umfasst, die Brennkraftmaschine in einen durch Ansteuerparameter definierten Sonderbetriebsmodus (S) zu überführen und während eines Diagnosezeitraums in dem Sonderbetriebsmodus (S) mit unter Diagnosegesichtspunkten vorteilhaften Ansteuerparametern zu betreiben, wobei zumindest während des Diagnosezeitraums wenigstens ein Betriebsparameter (321, 322, 323) der Brennkraftmaschine bestimmt wird und, bei dem mittels des wenigstens einen Einspritzventils (109) wenigstens eine Zusatzeinspritzung (212) abgesetzt wird, und wenigstens eine erste Ventilverzugszeit des wenigstens einen Einspritzventils (109) zumindest während der wenigstens einen Zusatzeinspritzung (212) ventilseitig erfasst und auf Grundlage des wenigstens einen Betriebsparameters (321, 322, 323) ausgewertet wird, **dadurch gekennzeichnet, dass** die erste Ventilverzugszeit eine Schließverzugszeit ist, wobei in Abhängigkeit von einer elektrischen Betriebsgröße eines elektromagnetischen Aktors des Einspritzventils (109) eine die Beschleunigung einer beweglichen Komponente des elektromagnetischen Aktors charakterisierende Größe gebildet wird und ausgehend von der die Beschleunigung charakterisierenden Größe auf einen Betriebszustand des Einspritzventils (109) geschlossen wird, wobei der hydraulische Schließzeitpunkt ermittelt wird.

2. Verfahren nach Anspruch 1, bei dem die Ansteuerparameter zumindest einen Raildruck umfassen.

3. Verfahren nach Anspruch 1 oder 2, bei dem die Ansteuerparameter zumindest ein Einspritzmuster (210) umfassen

4. Verfahren nach Anspruch 2 oder 3, bei dem ein Einspritzmuster (210) mit wenigstens einer Haupt- und wenigstens einer Zusatzeinspritzung (212) verwendet wird, wobei eine mittels der wenigstens einen Haupt- und der wenigstens einen Zusatzeinspritzung (212) insgesamt eingespritzte Kraftstoffmenge einer Regeleinspritzmenge entspricht.

5. Verfahren nach einem der Ansprüche 2 bis 4, bei dem ein Einspritzmuster (210) mit einer Haupteinspritzung als Spliteinspritzung mit wenigstens zwei Teileinspritzungen (211, 211') und einer Zusatzeinspritzung (212) verwendet wird.

6. Verfahren nach einem der Ansprüche 2 bis 5, bei dem eine Zusatzeinspritzung (212) während eines Saughubs (S) und/oder während eines Kompressionshubs (C) und/oder während eines Ausstoßhubs und/oder während eines Arbeitshubs in Form einer Vor- und/oder Nacheinspritzung abgesetzt wird.

7. Verfahren nach einem der vorstehenden Ansprüche, bei dem der wenigstens eine Betriebsparameter (321, 322, 323) zumindest eine Spannung eines Bordnetzes, einen Kraftstoffdruck, einen Raildruck, ein verwendetes Einspritzmuster, eine Pausenzeit zwischen zwei Einspritzungen, einen Kraftstofftyp, eine Motorlast, eine Motordrehzahl, eine Betriebsart der Brennkraftmaschine, eine Momentenreserve der Brennkraftmaschine und/oder Temperaturen eines Frischgases, eines Abgases, eines Kraftstoffs und/oder des Einspritzventils umfasst.

8. Verfahren nach einem der vorstehenden Ansprüche, bei dem die Brennkraftmaschine nur dann in den Sonderbetriebsmodus (S) überführt wird, wenn zuvor bestimmte Betriebsparameter (321, 322, 323) wenigstens teilweise innerhalb eines vorgegebenen Bereichs liegen.

9. Verfahren zum Betrieb einer Brennkraftmaschine, bei dem eine Beurteilung eines Einspritzverhaltens wenigstens eines Einspritzventils (109) der Brennkraftmaschine mittels eines Verfahrens nach einem der vorstehenden Ansprüche vorgenommen wird.

## Claims

1. Method for assessing an injection behaviour of at least one injection valve (109) of an internal combustion engine, which method comprises switching the internal combustion engine into a special operating mode (S) defined by control parameters and, during a diagnostic period, operating the internal combustion engine in the special operating mode (S) with control parameters which are advantageous from diagnostic aspects, wherein at least one operating parameter (321, 322, 323) of the internal combustion engine is determined at least during the diagnostic period, and in which method at least one additional injection (212) is performed by means of the at least one injection valve (109), and at least one first valve delay time of the at least one injection valve (109) is detected at the valve at least during the at least one additional injection (212) and is evaluated on the basis of the at least one operating parameter (321, 322, 323), **characterized in that** the first valve delay time is a closing delay time, wherein, in a manner dependent on an electrical operating variable of an electromagnetic actuator of the injection valve (109), a variable which characterizes the acceleration of a movable component of the electromagnetic actuator is formed and an operating state of the injection valve (109) is inferred on the basis of the variable which characterizes the acceleration, wherein the hydraulic closing time is ascertained.

2. Method according to Claim 1, in which the control parameters comprise at least a rail pressure.

3. Method according to Claim 1 or 2, in which the control parameters comprise at least an injection pattern (210) .

4. Method according to Claim 2 or 3, in which an injection pattern (210) is used which has at least one main and at least one additional injection (212), wherein a total fuel quantity injected by means of the at least one main and the at least one additional injection (212) corresponds to a control injection quantity.

5. Method according to any of Claims 2 to 4, in which an injection pattern (210) is used which has a main injection as a split injection with at least two partial injections (211, 211') and with an additional injection (212) .

6. Method according to any of Claims 2 to 5, in which an additional injection (212) is performed, in the form of a pre-injection and/or post-injection, during an intake stroke (S) and/or during a compression stroke (C) and/or during an exhaust stroke and/or during a working stroke.

7. Method according to any of the preceding claims, in which the at least one operating parameter (321, 322, 323) comprises at least a voltage of an on-board electrical system, a fuel pressure, a rail pressure, an injection pattern used, an interval time between two injections, a fuel type, an engine load, an engine rotational speed, an operating mode of the internal combustion engine, a torque reserve the internal combustion engine and/or temperatures of a fresh gas, of an exhaust gas, of a fuel and/or of the injection valve.

8. Method according to any of the preceding claims, in which the internal combustion engine is switched into the special operating mode (S) only when previously determined operating parameters (321, 322, 323) lie at least partially within a predefined range.

9. Method for operating an internal combustion engine, in which an assessment of an injection behaviour of at least one injection valve (109) of the internal combustion engine is performed by means of a method according to any of the preceding claims.

## Revendications

1. Procédé d'évaluation d'un comportement d'injection d'au moins un injecteur (109) d'un moteur à combustion interne, lequel comprend l'action d'amener le moteur à combustion interne dans un mode de fonctionnement spécial (S) défini par des paramètres de commande et de le faire fonctionner dans le mode de fonctionnement spécial (S) pendant une période de diagnostic avec des paramètres de commande avantageux du point de vue du diagnostic, au moins un paramètre de fonctionnement (321, 322, 323) du moteur à combustion interne étant déterminé au moins pendant la période de diagnostic, et avec lequel au moins une injection supplémentaire (212) est décalée au moyen de l'au moins un injecteur (109) et au moins un premier temps de retard d'injecteur de l'au moins un injecteur (109) est détecté du côté de l'injecteur au moins pendant l'au moins une injection supplémentaire (212) et interprété sur la base de l'au moins un paramètre de fonctionnement (321, 322, 323), **caractérisé en ce que** le premier temps de retard d'injecteur est un temps de retard de fermeture, une grandeur qui caractérise l'accélération d'un composant mobile d'un actionneur électromagnétique étant formée en fonction d'une grandeur opérationnelle électrique de l'actionneur électromagnétique de l'injecteur (109) et un état de fonctionnement de l'injecteur (109) étant conclu à partir de la grandeur qui caractérise l'accélération, l'instant de fermeture hydraulique étant identifié.

2. Procédé selon la revendication 1, avec lequel les paramètres de commande comprennent au moins une pression de rampe de distribution.

3. Procédé selon la revendication 1 ou 2, avec lequel les paramètres de commande comprennent au moins un modèle d'injection (210).

4. Procédé selon la revendication 2 ou 3, avec lequel est utilisé un modèle d'injection (210) comprenant au moins une injection principale et au moins une injection supplémentaire (212), une quantité de carburant totale injectée au moyen de l'au moins une injection principale et de l'au moins une injection supplémentaire (212) correspondant à une quantité d'injection régulée.

5. Procédé selon l'une des revendications 2 à 4, avec lequel est utilisé un modèle d'injection (210) comprenant une injection principale sous la forme d'une injection fragmentée comprenant au moins deux injections partielles (211, 211') et une injection supplémentaire (212).

6. Procédé selon l'une des revendications 2 à 5, avec lequel une injection supplémentaire (212) est décalée sous la forme d'une pré- et/ou d'une post-injection pendant une course d'aspiration (S) et/ou pendant une course de compression (C) et/ou pendant une course d'expulsion et/ou pendant une course de travail.

7. Procédé selon l'une des revendications précédentes, avec lequel l'au moins un paramètre de fonctionnement (321, 322, 323) comprend au moins une tension d'un réseau de bord, une pression de carburant, une pression de rampe de distribution, un modèle d'injection utilisé, un temps de pause entre deux injections, un type de carburant, une charge de moteur, une vitesse de rotation de moteur, un mode de fonctionnement du moteur à combustion interne, une réserve de couple du moteur à combustion interne et/ou les températures d'un gaz frais, des gaz d'échappement, d'un carburant et/ou de l'injecteur.

8. Procédé selon l'une des revendications précédentes, avec lequel le moteur à combustion interne n'est transféré dans le mode de fonctionnement spécial (S) que si des paramètres de fonctionnement (321, 322, 323) préalablement déterminés se trouvent au moins partiellement à l'intérieur d'une plage prédéfinie.

9. Procédé pour faire fonctionner un moteur à combustion interne, avec lequel une évaluation d'un comportement d'injection d'au moins un injecteur (109) du moteur à combustion interne est effectuée au moyen d'un procédé selon l'une des revendications précédentes.
